# EUROPÄISCHE PATENTANMELDUNG

(11) **EP 2 481 701 A1**
(43) Veröffentlichungstag der Anmeldung: **01.08.2012**
(21) Anmeldenummer: 11152715.6
(22) Anmeldetag: 31.01.2011
(51) Int. Cl.: B66D 1/12, B66D 1/30, B66B 11/04, H02K 1/27

(54) **Hubwerk für Containerkran und Containerkran**

(71) Anmelder: SIEMENS AKTIENGESELLSCHAFT, 80333 München (DE)
(72) Erfinder: Van Lith, Marcel, 2665 EK Bleiswijk (NL); Busse, Jörg, 91462 Dachsbach (DE); Recktenwald, Alois, 91074 Herzogenaurach (DE)

(57) **Zusammenfassung**

Ein erfindungsgemäßes Hubwerk für einen Containerkran umfaßt zumindest eine Seiltrommel (1) zum Anheben einer Last sowie zumindest einen die Seiltrommel (1) antreibendem elektrischen Motor (2). Ein Stator des Motors umfaßt einen an einer Stirnseite der Seiltrommel (1) angeordneten Spulenkörper, während sein Rotor zur Bildung eines sich axial oder radial erstreckenden Luftspalts in einem axialen oder radialen Abstand zum Stator angeordnet ist. Der Rotor weist auf einem Trägerelement (222), das stirnseitig mit der Seiltrommel verbunden ist, eine Permanentmagnetanordnung auf.

## Beschreibung

Ein Containerkran umfaßt üblicherweise einen Spreader, durch den ein Container gehalten wird, einem Seilturm, mittels dessen Tragseilen der Spreader mit dem Containerkran verbunden ist, und ein Hubwerk, mittels dessen Seiltrommeln die den Seilturm bildenden Tragseile zum Anheben bzw. Absenken des Containers auf- und abrollbar sind.

Aus DE 20013621 U1 ist eine Containerkran mit einem Spreader, an dem ein Container fixierbar ist, einem Seilturm, mittels dessen Tragseilen der Spreader mit dem Containerkran verbunden ist, und einem Hubwerk bekannt, mittels dessen Seiltrommeln die den Seilturm bildenden Tragseile zur Anhebung bzw. zur Absenkung des Containers auf- und abrollbar sind. Dabei ist die erste einem Seilturmabschnitt zugeordnete Seiltrommel in Quer- bzw. Längsrichtung des Containers auf der einen Seite des Containerkrans angeordnet. Das dieser ersten Seiltrommel zugeordnete Tragseil ist dagegen an seinem der Seiltrommel abgewandten Seilende in Quer- bzw. Längsrichtung des Containers an der unter der anderen Seite des Containerkrans angeordneten anderen Seite des Spreaders befestigt. Die zweite dem Seilturmabschnitt zugeordnete Seiltrommel ist in Quer- bzw. Längsrichtung des Containers auf der der einen entgegengesetzten anderen Seite des Containerkrans angeordnet. Das dieser zweiten Seiltrommel zugeordnete Tragseil ist dagegen an seinem der Seiltrommel abgewandten Seilende in Quer- bzw. Längsrichtung des Containers an der unter der der anderen entgegengesetzten einen Seite des Containerkrans angeordneten einen Seite des Spreaders befestigt.

In DE 20013634 U1 ist ein Containerkran mit einem Lastaufnahmemittel, an dem ein Container fixierbar ist, und einer Vorrichtung zur Kompensation von Pendelbewegungen und Drehschwingungen einer durch das das Aufnahmemittel und den Container gebildeten Kranlast beschrieben. Die Vorrichtung zur Kompensation von Pendelbewegungen und Drehschwingungen der Kranlast umfaßt einen ersten Seilturmabschnitt, der an der einen Querseite des Containers angeordnet ist, einen zweiten Seilturmabschnitt, der an der der einen entgegengesetzten anderen Querseite des Containers angeordnet ist, und eine elektronische Pendelregelungseinheit. Mittels der beiden Seilturmabschnitte sind Pendelbewegungen der Kranlast in Containerquerrichtung und Drehschwingungen der Kranlast um die vertikale Mittelachse der Kranlast kompensierbar, während mittels der elektronischen Pendelregelungseinheit Pendelbewegungen der Kranlast in Containerlängsrichtung kompensierbar sind.

Der vorliegenden Erfindung liegt die Aufgabe zugrunde, ein Hubwerk für Hublasten über 40 Tonnen, das ein geringes Eigengewicht und einen geringen Platzbedarf aufweist, sowie einen Containerkran anzugeben, in den ein solches Hubwerk integrierbar ist.

Diese Aufgabe wird erfindungsgemäß durch ein Hubwerk mit den in Anspruch 1 angegebenen Merkmalen und durch einen Containerkran mit den in Anspruch 9 angegebenen Merkmalen gelöst. Vorteilhafte Weiterbildungen der vorliegenden Erfindung sind in den abhängigen Ansprüchen angegeben.

Das erfindungsgemäße Hubwerk für einen Containerkran umfaßt zumindest eine Seiltrommel zum Anheben einer Last sowie zumindest einen die Seiltrommel antreibendem elektrischen Motor. Ein Stator des Motors umfaßt einen an einer Stirnseite der Seiltrommel angeordneten Spulenkörper, während sein Rotor zur Bildung eines sich axial oder radial erstreckenden Luftspalts in einem axialen oder radialen Abstand zum Stator angeordnet ist. Der Rotor weist auf einem Trägerelement, das stirnseitig mit der Seiltrommel verbunden ist, eine Permanentmagnetanordnung auf. Hieraus resultiert für das erfindungsgemäße Hubwerk ein deutlich verringerter Platzbedarf sowie ein stark reduziertes Gewicht. Aufgrund des stark reduzierten Gewichts kann das Hubwerk auf einer Laufkatze eines Containerkrans montiert werden. Eine Anordnung in einem separaten Maschinenhaus sowie aufwendige Seilführungen sind damit nicht mehr erforderlich.

Vorzugsweise ist der Motor als Segmentmotor ausgebildet. Dabei umfaßt die Permanentmagnetanordnung segmentweise auf dem Trägerelement angeordnete Permanentmagnete, die mit segmentweise angeordneten Spulen des Spulenkörpers zusammenwirken. Dies ergibt eine äußerst wartungsfreundliche Konstruktion sowie eine erhöhte Betriebssicherheit, da das Hubwerk grundsätzlich auch bei einem Ausfall einzelner Rotor- oder Statorsegmente mit einer reduzierten Anzahl an Rotor- oder Statorsegmenten weiterbetrieben werden kann.

Entsprechend einer Weiterbildung der vorliegenden Erfindung ist de Seiltrommel mittels eines Keilmechanismus arretierbar, der einen mittels eines ersten und zweiten Keilkörpers betätigbaren Reibekörper umfaßt. Der erste und zweite Keilkörper weisen jeweils in Wechselwirkung miteinander stehende Anlageflächen auf. Des weiteren ist ein mit der Seiltrommel verbundenes und mit diesem um seine Achse drehbares Arretierelement vorgesehen. Der Reibekörper übt bei einer Relativbewegung zwischen dem ersten und zweiten Keilkörper eine Anpreßkraft auf das Arretierelement aus. Auf diese Weise können mit einer kompakten Anordnung hohe Lasten wirksam gebremst bzw. gehalten werden.

Eine besonders kompakte Bauweise eines Hubwerks ergibt sich entsprechend einer weiteren Ausgestaltung der vorliegenden Erfindung, wenn das Trägerelement in die Seiltrommel integriert ist. Dabei können Rotor und Stator des Motors zur Bildung eines sich axial erstreckenden Luftspalts beispielsweise in separaten Ebenen angeordnet sein und ein Seiltrommellager umgeben. Alternativ dazu können Rotor und Stator des Motors zur Bildung eines sich radial erstreckenden Luftspalts im wesentlichen in einer gemeinsamen Ebene angeordnet sein und ein Seiltrommellager umgeben.

Der Motor des Hubwerks ist vorzugsweise als elektrischer Direktantrieb ausgestaltet. Aufgrund einer Einsparung eines Getriebes ergibt dies eine erhebliche Gewichtseinsparung. Darüber hinaus ist vorteilhafterweise an beiden Stirnseiten der Seiltrommel jeweils ein Rotor angeordnet, der durch einen zugeordneten Stator erregbar ist. Dies ermöglicht einerseits eine gute Lastverteilung sowie eine erhöhte Ausfallsicherheit.

Der erfindungsgemäße Containerkran umfaßt eine auf einem Krangestell verfahrbare Laufkatze sowie zumindest ein Hubwerk. Das Hubwerk umfaßt wiederum zumindest eine Seiltrommel zum Anbeben einer Last und zumindest einen die Seiltrommel antreibendem elektrischen Motor, dessen Stator einen an einer Stirnseite der Seiltrommel angeordneten Spulenkörper umfaßt. Ein Rotor des Motors ist zur Bildung eines sich axial oder radial erstreckenden Luftspalts in einem axialen oder radialen Abstand zum Stator angeordnet und weist auf einem Trägerelement, das stirnseitig mit der Seiltrommel verbunden ist, eine Permanentmagnetanordnung auf. Das Hubwerk ist auf der Laufkatze montiert.

Die vorliegende Erfindung wird nachfolgend an einem Ausführungsbeispiel anhand der Zeichnung näher erläutert. Es zeigt
- Figur 1: eine schematische Darstellung eines erfindungsgemäβen Hubwerks,
- Figur 2: einen Rotor des Hubswerks gemäß Figur 1,
- Figur 3: einen Stator des Hubwerks gemäß Figur 1,
- Figur 4: eine schematische Darstellung einer ersten Anordnung von Rotor und Stator,
- Figur 5: eine schematische Darstellung einer zweiten Anordnung von Rotor und Stator,
- Figur 6: eine Detaildarstellung einer Arretierungsvorrichtung für das Hubwerk gemäß Figur 1,
- Figur 7: eine schematische Darstellung eines Containerkrans mit einem Hubwerk gemäß Figur 1.

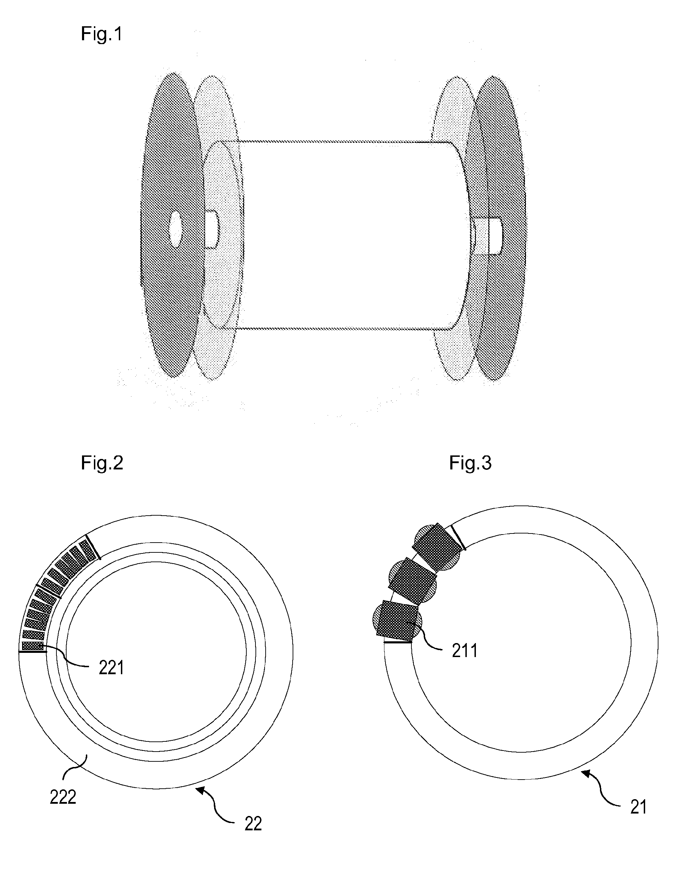

Das in Figur 1 dargestellte Hubwerk für einen Containerkran umfaßt eine Seiltrommel 1 zum Anheben einer Last und zwei die Seiltrommel 1 antreibende elektrischen Motoren 2. Die als elektrische Direktantriebe ausgestalten elektrischen Motoren 2 umfassen jeweils einen Stator 21, der einen an einer Stirnseite der Seiltrommel 1 angeordneten Spulenkörper aufweist. Zusätzlich weisen die elektrischen Motoren 1 im vorliegenden Ausführungsbeispiel jeweils einen Rotor 22 zur Bildung eines sich axial erstreckenden Luftspalts auf. Die Rotoren 22 sind dabei in einem axialen Abstand zum jeweiligen Stator 21 angeordnet.

Entsprechend Figur 2 umfaßt jeder Rotor 21 auf einem Trägerelement 222, das stirnseitig mit der Seiltrommel 1 verbunden ist, eine Permanentmagnetanordnung. Die Trägerelemente 222 sind vorzugsweise in die Seiltrommel 1 integriert. Die Motoren 2 sind als Segmentmotoren ausgebildet. Die Permanentmagnetanordnungen umfassen jeweils segmentweise auf dem Trägerelement 222 angeordnete Permanentmagnete 221, die mit gemäß Figur 3 segmentweise angeordneten Spulen 211 des Spulenkörpers zusammenwirken.

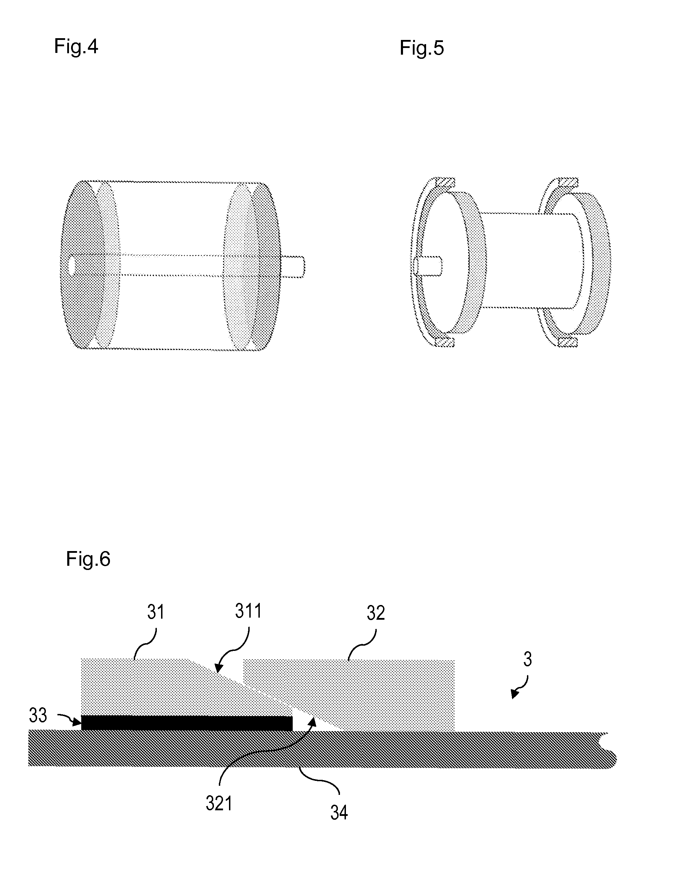

In Figur 4 ist eine erste Anordnung von Rotor 22 und Stator 21 schematisch dargestellt, bei der Rotor 22 und Stator 21 eines Motors 2 zur Bildung eines sich axial erstreckenden Luftspalts in separaten Ebenen angeordnet sind und ein nicht explizit dargestelltes Seiltrommellager umgeben. Alternativ dazu können Rotor 22 und Stator 21 entsprechend Figur 5 zur Bildung eines sich radial erstreckenden Luftspalts im wesentlichen in einer gemeinsamen Ebene angeordnet sein.

Zum Bremsen oder Halten von seilgeführten Lasten ist die in Figur 6 dargestellte Arretierungsvorrichtung 3 vorgesehen. Die Arretierungsvorrichtung 3 umfaßt einen mittels eines ersten Keilkörpers 31 und eines zweiten Keilkörpers 32 betätigbaren Reibekörper 33. Der erste Keilkörper 31 und der zweite Keilkörper 32 weisen jeweils in Wechselwirkung miteinander stehende Anlageflächen 311, 321 auf. Außerdem umfaßt die Arretierungsvorrichtung 3 ein mit der Seiltrommel 1 verbundenes und mit diesem um seine Achse drehbares Arretierelement 34, das beispielsweise am jeweiligen Trägerelement 222 angeformt oder in dieses integriert sein kann. Der Reibekörper 33 übt eine Anpreßkraft auf das Arretierelement 34 aus, wenn die beiden Keilkörper aufeinander zu bewegt werden bzw. wenn ein Keilkörper in Richtung des anderen Keilkörpers verschoben und der andere Keilkörper fixiert wird.

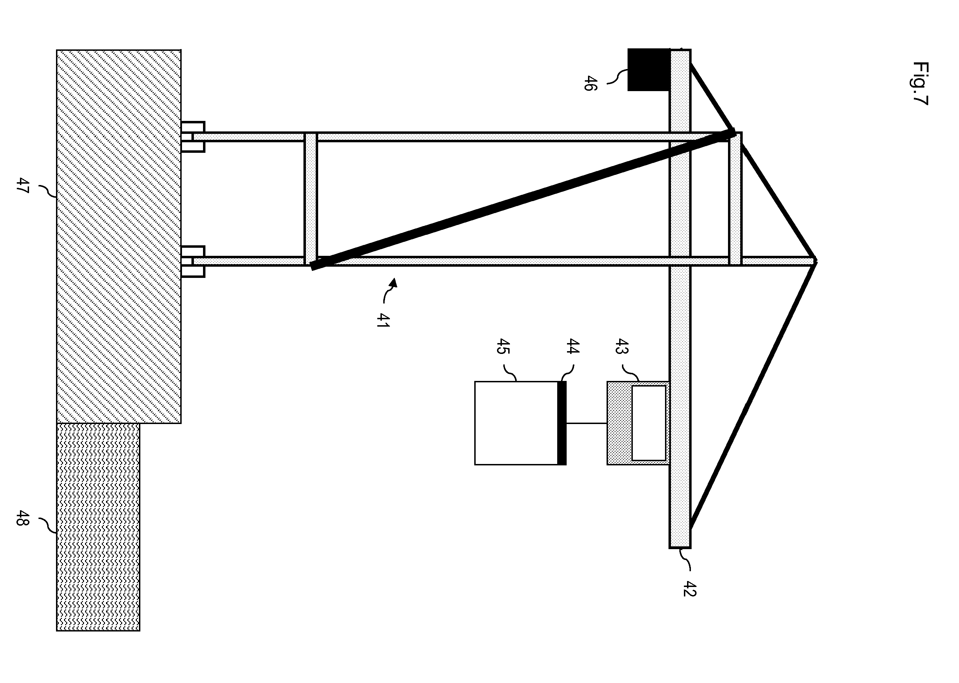

Der in Figur 7 dargestellte Containerkran weist einen mit einem Krangestell 41 verbundenen Ausleger 42 auf, entlang dessen eine Laufkatze 43 mit einem durch einen Greifer 44 gehaltenen Container 45 zwischen einer Kaianlage 47 und einer wasserseitigen Anlegestelle 48 für Containerschiffe bewegt werden kann. Am Ausleger 42 bzw. Brückenträger ist zur Stabilisierung des Krangestells 41 ein Ausgleichsgewicht 46 montiert. Zusätzlich weist der Containerkran ein Hubwerk 1 entsprechend Figur 1 auf, das eine Seiltrommel 1 Last und zwei die Seiltrommel 1 antreibendem elektrische Motoren 2 umfaßt, deren Statoren 21 jeweils einen an einer Stirnseite der Seiltrommel 1 angeordneten Spulenkörper umfassen. Zur Bildung eines sich axial erstreckenden Luftspalts sind die Rotoren 22 jeweils in einem axialen Abstand zum zugeordneten Stator 21 angeordnet und weisen auf einem Trägerelement, das stirnseitig mit der Seiltrommel 1 verbunden ist, eine Permanentmagnetanordnung auf. Das Hubwerk ist an der Laufkatze 43 montiert.

Die Anwendung der vorliegenden Erfindung ist nicht auf das beschriebene Ausführungsbeispiel beschränkt.

## Patentansprüche

1. Hubwerk für Containerkran mit
— zumindest einer Seiltrommel zum Anheben einer Last,
— zumindest einem die Seiltrommel antreibendem elektrischen Motor, dessen Stator einen an einer Stirnseite der Seiltrommel angeordneten Spulenkörper umfaßt, und dessen Rotor zur Bildung eines sich axial oder radial erstreckenden Luftspalts in einem axialen oder radialen Abstand zum Stator angeordnet ist und auf einem Trägerelement, das stirnseitig mit der Seiltrommel verbunden ist, eine Permanentmagnetanordnung aufweist.

2. Hubwerk nach Anspruch 1,
bei dem der Motor als Segmentmotor ausgebildet ist, und bei der die Permanentmagnetanordnung segmentweise auf dem Trägerelement angeordnete Permanentmagnete umfaßt, die mit segmentweise angeordneten Spulen des Spulenkörpers zusammenwirken.

3. Hubwerk nach einem der Ansprüche 1 oder 2,
bei dem die Seiltrommel mittels eines Keilmechanismus arretierbar ist, der einen mittels eines ersten und zweiten Keilkörpers betätigbaren Reibekörper umfaßt, und bei der erster und zweiter Keilkörper jeweils in Wechselwirkung miteinander stehende Anlageflächen aufweisen, und bei der ein mit der Seiltrommel verbundenes und mit diesem um seine Achse drehbares Arretierelement vorgesehen ist, und bei der der Reibekörper bei einer Relativbewegung zwischen dem ersten und zweiten Keilkörper eine Anpreßkraft auf das Arretierelement ausübt.

4. Hubwerk nach einem der Ansprüche 1 bis 3,
bei dem das Trägerelement in die Seiltrommel integriert ist.

5. Hubwerk nach einem der Ansprüche 1 bis 4,
bei dem Rotor und Stator des Motors zur Bildung eines sich axial erstreckenden Luftspalts in separaten Ebenen angeordnet sind und ein Seiltrommellager umgeben.

6. Hubwerk nach einem der Ansprüche 1 bis 4,
bei dem Rotor und Stator des Motors zur Bildung eines sich radial erstreckenden Luftspalts im wesentlichen in einer gemeinsamen Ebene angeordnet sind und ein Seiltrommellager umgeben.

7. Hubwerk nach einem der Ansprüche 1 bis 6,
bei dem der Motor als elektrischer Direktantrieb ausgestaltet ist.

8. Hubwerk nach einem der Ansprüche 1 bis 7,
bei dem an beiden Stirnseiten der Seiltrommel jeweils ein Rotor angeordnet ist, der durch einen zugeordneten Stator erregbar ist.

9. Containerkran mit
- einer auf einem Krangestell verfahrbaren Laufkatze,
- zumindest einem Hubwerk, das
- zumindest einer Seiltrommel zum Anbeben einer Last und
- zumindest einem die Seiltrommel antreibendem elektrischen Motor umfaßt, dessen Stator einen an einer Stirnseite der Seiltrommel angeordneten Spulenkörper umfaßt, und dessen Rotor zur Bildung eines sich axial oder radial erstreckenden Luftspalts in einem axialen oder radialen Abstand zum Stator angeordnet ist und auf einem Trägerelement, das stirnseitig mit der Seiltrommel verbunden ist, eine Permanentmagnetanordnung aufweist,
- wobei das Hubwerk auf der Laufkatze montiert ist.
